(19) Europäisches Patentamt
European Patent Office
Office européen des brevets

(11) **EP 2 037 227 B1**

(12) **EUROPÄISCHE PATENTSCHRIFT**

(45) Veröffentlichungstag und Bekanntmachung des Hinweises auf die Patenterteilung:
**04.11.2015   Patentblatt 2015/45**

(51) Int Cl.:
*B61L 25/02* (2006.01)   *B66C 13/46* (2006.01)
*G01D 5/249* (2006.01)   *G01D 5/26* (2006.01)
*G05D 1/02* (2006.01)   *G01D 5/347* (2006.01)
*B66C 13/16* (2006.01)

(21) Anmeldenummer: **08005215.2**

(22) Anmeldetag: **19.03.2008**

(54) **Verfahren und Vorrichtung zum Bestimmen der Position eines Fahrzeugs, Computerprogramm und Computerprogrammprodukt**

Method and device for determining the position of a vehicle

Procédé et dispositif destinés à la détermination de la position d'un véhicule

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.09.2007   DE 102007043498**
**12.09.2007   DE 202007012798 U**

(43) Veröffentlichungstag der Anmeldung:
**18.03.2009   Patentblatt 2009/12**

(73) Patentinhaber: **Pepperl + Fuchs GmbH**
**68307 Mannheim (DE)**

(72) Erfinder:
• **Hofmann, Hilmar**
**69502 Hemsbach (DE)**
• **Opper, Rüdiger**
**67240 Bobenheim-Roxheim (DE)**
• **Kirsch, Martin**
**68259 Mannheim (DE)**

(74) Vertreter: **Schiffer, Axel Martin et al**
**Weber & Heim**
**Patentanwälte**
**Partnerschaftsgesellschaft mbB**
**Irmgardstrasse 3**
**81479 München (DE)**

(56) Entgegenhaltungen:
**EP-A- 0 722 903        EP-A- 1 582 846**
**DE-A1-102004 018 404    DE-C1- 4 104 602**

EP 2 037 227 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft in einem ersten Aspekt ein Verfahren zum Bestimmen der Position eines Fahrzeugs nach dem Oberbegriff des Anspruchs 1.

In einem weiteren Gesichtspunkt bezieht sich die Erfindung auf eine Vorrichtung zum Bestimmen der Position eines Fahrzeugs nach dem Oberbegriff des Anspruchs 13.

Außerdem betrifft die Erfindung ein Computerprogramm und ein Computerprogrammprodukt.

Ein gattungsgemäßes Verfahren ist beispielsweise in DE 199 10 933 A1 offenbart. Hierbei wird ein Fahrzeug entlang einer Bahn, welche grundsätzlich entlang einer beliebigen Kurve verlaufen kann, bewegt und zur Positionsbestimmung sind entlang der Bahn eindimensionale Barcodes als Marker angeordnet.

Die Erfindung bezieht sich insbesondere auf Fahrzeuge wie EinschienenHängebahnen, Regalbediengeräte, Krananlagen oder sonstige verfahrbare Geräte, die entlang einer Bahn oder auf oder parallel zu einer vorgegebenen Fläche verfahrbar sind.

Weitere Positionierverfahren sind in EP 0 039 921 A2, DE 38 25 097 A1, EP 0 116 636 A1, DE 39 10 873 A1, DE 42 09 629 A1 und DE 43 09 863 C1 beschrieben. Diese bekannten Systeme weisen folgende Nachteile auf.

Die erreichbare Genauigkeit der Positionsbestimmung ist durch die Länge der Codemarken oder deren Elemente begrenzt, da die Codeelemente in einer oder mehreren parallelen Spuren längs des Fahrwegs aufgereiht sind und beim Verfahren nacheinander abgetastet werden müssen. Die Packungsdichte der Codeelemente auf dem Codeträger kann aber nicht über ein gewisses Maß hinaus erhöht werden, weil das räumliche Auflösungsvermögen der Abtastelemente, z.B. Lichtschranken, begrenzt ist. Die Länge der Codeträger kann daher nicht unter einen bestimmten Mindestwert verkleinert werden, so dass der Positionsauflösung Grenzen gesetzt sind.

Ferner ist zur lückenlosen Abdeckung eines langen Fahrwegs mit ausreichender Längsauflösung eine große Anzahl von Codeträgern und somit, wenn sich der Codeinhalt längs des Fahrweges nicht wiederholen soll, eine entsprechend große Wortbreite der Codes erforderlich. Eine zunehmende Wortbreite läßt aber nicht nur die Länge der einzelnen Codeträger, sondern vor allem auch den Aufwand und die Kosten für die Codeleser sehr schnell anwachsen.

Ferner geht mit längeren Codeträgern eine geringere Auflösung der Positionsbestimmung einher, so dass eine Realisierung von Fahrwegen von mehreren Kilometern, die z.B. in modernen industriellen Fertigungsstraßen erwünscht oder notwendig sein können, mit hinreichender Auflösung schwierig ist. Diese Problematik wird noch erheblich verschärft, wenn auf den Codeträgern redundante Informationen vorhanden sein sollen, um die Betriebssicherheit des Systems, z.B. dessen Resistenz gegen Verschmutzung oder Beschädigung von Teilen des Codeträgers, zu verbessern und dadurch das Risiko von Ausfällen oder, unter Umständen folgenschweren, Fehlpositionierungen zu verringern.

Außerdem erlaubt keines der bekannten Systeme zusätzlich zur Positionsbestimmung in Fahrtrichtung auch eine Positionsbestimmung quer zur Fahrtrichtung. Eine solche kann etwa zum automatischen Ausgleich von temperatur- oder lastwechselbedingten Biegeverformungen wünschenswert sein. Darüber hinaus sind die erforderlichen Abtastelemente, bevorzugt Lichtschranken, anfällig für Dejustierungen und Verschmutzungen und damit wartungsintensiv. Dies spielt insbesondere eine Rolle bei Systemen mit einer Vielzahl von nebeneinander angeordneten Abtastelementen.

Ein weiterer Nachteil der genannten Systeme besteht darin, dass eine Positionsbestimmung bei stillstehendem Fahrzeug nicht ohne weiteres möglich ist. Diejenigen Systeme, welche im Durchlichtverfahren arbeiten, sind außerdem mechanisch aufwendig und anfällig gegen Verformungen des Codeträgers. Einige der oben genannten Systeme sind ferner sehr empfindlich gegen Änderungen der Orientierung der Codeträger gegenüber dem Codeleser.

Eine weitere grundsätzliche Anforderung und Aufgabenstellung besteht bei solchen Systemen zur Positionsbestimmung außerdem darin, eine Positionsinformation auch dann präzise bereitzustellen, wenn die Bahnen, auf denen sich die zu überwachenden Fahrzeuge bewegen, Kurven aufweisen.

In DE 10 2004 018 404 A1 ist eine Vorrichtung mit einer Kamera beschrieben, welche relativ zu einem aus Markern gebildeten Positionsmaßstab beweglich ist. Eine Position der Vorrichtung wird anhand der Lage eines Markers im Erfassungsbereich der Kamera sowie der im Marker kodierten Informationen bestimmt.

EP 1 582 846 A2 betrifft einen optischen Positionssensor, der eine Kamera und eine Zieleinheit umfasst. Die Zieleinheit emittiert Licht mit einem strukturierten Muster, welches von der Kamera gemessen und ausgewertet wird, um eine Lage der Zieleinheit relativ zum Positionssensor zu ermitteln.

DE 41 04 602 C1 beschreibt ein Verfahren zur Lagebestimmung eines Abtasters relativ zu einem Maßstab, an dem Marken in konstantem Abstand angebracht sind. Der Abtaster nimmt ein Bild der Marken auf und liest in den Marken kodierte Positionsinformationen. Das aufgenommene Bild wird zusätzlich im Hinblick auf die Abstände zwischen den Marken ausgewertet, um so einen Abstand und eine Neigung zwischen dem Abtaster und dem Maßstab zu bestimmen.

EP 0 722 903 A1 beschreibt eine Vorrichtung zur Steuerung eines Fahrstuhls in einem Fahrstuhlschacht. An dem Schacht sind Code-tragende Spuren angebracht, von denen eine Kamera, die an dem Fahrstuhl angeordnet ist, Bilder aufnimmt und auswertet. Aus aufeinanderfolgenden Bildern wird dabei eine Verschiebung des Codes bestimmt, woraus eine Position und eine Geschwindigkeit des Fahrstuhls berechnet werden.

Als eine Aufgabe der Erfindung kann angesehen werden, ein Verfahren bereitzustellen und eine Vorrichtung zu schaffen, welche eine verbesserte Positionsauflösung ermöglichen und längere Fahrwege erlauben. Weiterhin soll eine zuverlässige Bestimmung der Position auch dann möglich sein, wenn der Fahrweg Kurven aufweist. Außerdem soll ein geeignetes Computerprogramm angegeben werden.

Diese Aufgabe wird in einem ersten Gesichtspunkt der Erfindung durch das Verfahren mit den Merkmalen des Anspruchs 1 gelöst.

In einem weiteren Gesichtspunkt der Erfindung wird die Aufgabe durch die Vorrichtung mit den Merkmalen des Anspruchs 11 gelöst.

Schließlich wird die Aufgabe gelöst durch das Computerprogramm mit den Merkmalen des Anspruchs 12 und das Computerprogrammprodukt mit den Merkmalen des Anspruchs 13.

Das Verfahren der oben genannten Art ist erfindungsgemäß dadurch weitergebildet, dass die Marker mit einer an dem Fahrzeug angeordneten Digitalkamera erfasst werden und dass mittels Bildverarbeitung aus einer Lage mindestens eines Markerbilds im Erfassungsbereich der Digitalkamera und einer Form des Markerbilds oder der Markerbilder eine Relativposition des Fahrzeugs bezüglich des jeweiligen Markers oder der jeweiligen Marker bestimmt wird.

Die Vorrichtung der oben genannten Art ist erfindungsgemäß weitergebildet durch eine an dem Fahrzeug anzuordnende Digitalkamera zum Erfassen von entlang der Bahn angeordneten Markern, insbesondere Codeträgern oder Barcodes, und eine Recheneinrichtung, welche eingerichtet ist zum Bestimmen einer Relativposition des Fahrzeugs bezüglich eines Markers mittels Bildverarbeitung aus einer Lage und einer Form eines Markerbilds des jeweiligen Markers in einem Erfassungsbereich der Digitalkamera.

Bevorzugte Ausführungsvarianten des erfindungsgemäßen Verfahrens sind Gegenstand der abhängigen Ansprüche.

Erfindungsgemäß wurde zunächst erkannt, dass mit Hilfe von Bildverarbeitungsverfahren eine Positionsbestimmung eines Fahrzeugs in sehr präziser Weise möglich ist, indem die Position oder Lage eines bestimmten Markers in einem Erfassungsbereich einer Digitalkamera bestimmt und ausgewertet wird.

Das erfindungsgemäße Verfahren, bei welchem es sich um ein Auflichtverfahren handelt, kann insbesondere auch eine Positionsinformation für ein stillstehendes Fahrzeug liefern und, im Unterschied zu Verfahren aus dem Stand der Technik, ist auch eine Positionsbestimmung quer zur Fahrt- oder Bewegungsrichtung möglich.

Ein weiterer wesentlicher Vorteil der Erfindung kann darin gesehen werden, dass die erfindungsgemäßen Verbesserungen im Wesentlichen nicht durch apparativen Zusatzaufwand, sondern durch geschicktes Betreiben der vorhandenen Komponenten erzielt wird.

Als wesentlicher Kerngedanke der Erfindung kann außerdem erachtet werden, nicht nur die Lage oder Position eines Markerbilds im Erfassungsbereich der Digitalkamera, sondern auch die Form des Markerbilds für die Positionsauswertung zu berücksichtigen. Aus den ermittelten Messdaten wird demgemäß beim erfindungsgemäßen Verfahren deutlich mehr Information extrahiert.

Die Auswertung der Form der Markerbilder gestattet insbesondere auch eine präzise Bestimmung der relativen Orientierung und des Abstands der Digitalkamera bezüglich des jeweiligen Markers. Aus diesen Daten kann dann bei bekannter Geometrie des Fahrzeugs und der Anordnung der Digitalkamera am Fahrzeug mit Hilfe elementarer geometrischer Berechnungen die Position des Fahrzeugs genau ermittelt werden.

Ein sehr wichtiger Vorteil der Erfindung ist deshalb, dass auch unter gekippten Bedingungen die korrekte Position des Fahrzeugs oder des verfahrbaren Geräts bestimmt werden kann. Die erfindungsgemäßen Vorteile kommen deshalb insgesamt besonders bei Anwendungen zur Geltung, bei denen Fahrzeuge um Kurven fahren und es demgemäß vorkommen kann, dass sich die Kamera gegenüber den Markern, insbesondere den Barcodes, verkippt.

Bezüglich der Kamera kann auf bekannte und verfügbare Komponenten zurückgegriffen werden. Beispielsweise können Kameras mit einem CCD- oder einem CMOS-Empfängerchip eingesetzt werden.

Auch bei der Recheneinrichtung kann es sich um grundsätzlich bekannte Komponenten handeln. Besonders bevorzugt werden Mikrocontroller oder programmierbare Logikbausteine verwendet. Insbesondere können speziell für die Bildverarbeitung ausgelegte und bestimmte Bausteine eingesetzt werden.

Als Marker können grundsätzlich alle graphisch darstellbaren Codierungs- und Markierungstypen verwendet werden, deren Strukturen und damit die dort enthaltene Information mit einer Digitalkamera erkannt und ausgewertet werden können.

Bevorzugt werden Barcodes, insbesondere zweidimensionale Barcodes, eingesetzt.

Damit aus den Markern eine eindeutige Positionsinformation gewonnen werden kann, ist es zweckmäßig, wenn die verwendeten Marker mittels Bildverarbeitung durch die Digitalkamera eindeutig unterscheidbar sind.

Die Auswertung der Form der Markerbilder wird erleichtert, wenn alle verwendeten Marker dieselbe Größe aufweisen. Weitere Vereinfachungen sind in diesem Zusammenhang möglich, wenn die Marker in einer definierten Orientierung an der Bahn angeordnet werden. Beispielsweise können die Marker mit einer Längsseite in einer Erstreckungsrichtung der Bahn angeordnet sein.

Bei einer besonders bevorzugten Variante des erfindungsgemäßen Verfahrens weisen die verwendeten Marker eine rechteckige, insbesondere eine quadratische Außenkontur auf. Die Algorithmen zur Berechnung von Abständen und Verkippungen können sich dann an den Kanten der Rechtecke oder Quadrate orientieren. Beispielsweise können an diese Kanten Fluchtlinien angelegt werden, welche zur weiteren Berechnung der Position hilfreich sind.

Das erfindungsgemäße Verfahren kann aber auch so durchgeführt werden und das erfindungsgemäße Computerprogramm dementsprechend so aufgebaut sein, dass bei der Auswertung zunächst keine Identifizierung der einzelnen Marker erfolgt. Die Positionsinformation wird dann gewonnen durch Zählen von nachgewiesenen charakteristischen Strukturen, beispielsweise durch Zählen der nachgewiesenen Kanten.

Bei diesen Verfahrensvarianten kann die Positionsinformation besonders rasch bereitgestellt werden, da zum Erkennen nur der charakteristischen Strukturen vergleichsweise wenige Pixel ausreichend sein können.

Voraussetzung hierfür ist, dass die Abstände der Marker zueinander bekannt sind. Im Regelfall werden hierzu die Marker äquidistant zueinander entlang der Bahn angeordnet.

Für die Erkennung und Auswertung der Barcodes mit Hilfe von bildverarbeitenden Verfahren ist es zweckmäßig, wenn der Abstand zwischen einzelnen zweidimensionalen Barcodes mindestens so groß ist wie die kleinste in den Barcodes auftretende Struktur, also mindestens so groß wie eine minimale Informationseinheit, insbesondere mindestens so groß ein Bit, des zweidimensionalen Barcodes.

Grundsätzlich kann es für bestimmte Anwendungen, beispielsweise wenn die Geometrie der Kurve, durch welche sich das Fahrzeug bewegt, sehr gut bekannt ist, bereits ausreichend sein, einen Abstand der Digitalkamera von einem bestimmten Marker auf der Bahn zu bestimmen. Dies kann durch Auswerten der Form des entsprechenden Markerbilds, insbesondere durch Auswerten der Größe des Markerbilds, erfolgen.

Entsprechend kann es für solche Anwendungen auch ausreichend sein, mindestens einen Verkippungswinkel einer optischen Achse der Digitalkamera gegenüber der Bahn zu bestimmen.

Die Genauigkeit der Positionsbestimmung wird verbessert, wenn beide genannten Maßnahmen durchgeführt werden, wenn also ein Abstand der Digitalkamera von der Bahn und außerdem ein Verkippungswinkel der Digitalkamera gegenüber der Bahn bestimmt wird.

Unabhängig von einer Kenntnis eines Verlaufs der Kurve kann dementsprechend aus dem Abstand der Digitalkamera von einem Marker und dem Verkippungswinkel oder mehreren Verkippungswinkeln eine tatsächliche Position der Digitalkamera über der Bahn bestimmt werden.

Eine präzise Positionsbestimmung kann auch bei sehr komplexen Geometrien erreicht werden, wenn Verkippungen der Digitalkamera in zwei von einander unabhängigen Richtungen bestimmt werden.

Grundsätzlich kann der Abstand bestimmt werden aus einer Dehnung oder einer Stauchung eines Markerbilds in einer vorzugebenden Richtung im Vergleich zum Bild des betreffenden Markers bei normaler, insbesondere bei senkrechter, Stellung der Digitalkamera in einem Normalabstand über der Bahn.

Entsprechend kann der Verkippungswinkel oder können mehrere Verkippungswinkel der Digitalkamera bestimmt werden aus einer Dehnung oder Stauchung eines Markerbilds in zwei vorzugebenden Richtungen im Vergleich zum Bild des betreffenden Markers bei normaler, insbesondere senkrechter, Stellung der Digitalkamera in einem Normalabstand über der Bahn.

Diese Schritte können jeweils durch mathematisch äquivalente Abläufe ersetzt werden.

Mit vergleichsweise wenig Rechenaufwand können diese Auswertungen bei einem besonders bevorzugten Ausführungsbeispiel, bei der als Marker rechteckige oder quadratische Barcodes verwendet werden, durchgeführt werden. Der Abstand wird dabei aus einer Länge einer Querseite eines Markerbilds bestimmt auf Grundlage einer bekannten realen Länge der Querseite des betreffenden Markers.

Ein Verkippungswinkel kann in entsprechender Weise berechnet werden aus einer Länge eines Markerbilds in Erstreckungsrichtung der Bahn und dem Abstand der Digitalkamera von dem betreffenden Marker auf Grundlage einer bekannten realen Länge des betreffenden Markers in Erstreckungsrichtung der Bahn.

Eine Positionsbestimmung mit dem hier beschriebenen Verfahren ist grundsätzlich auch in zwei Dimensionen möglich, es kann also eine Positionsbestimmung des Fahrzeugs in x-Richtung und in y-Richtung durchgeführt werden. Hierzu können die Marker, beispielsweise also die zweidimensionalen Barcodes, in mehreren Reihen entlang der Bahn angeordnet werden.

Prinzipiell kann es ausreichend sein, aus den festgestellten Markerbildern im Erfassungsbereich der Digitalkamera jeweils die Relativposition des Fahrzeugs bezüglich des jeweiligen Markers zu bestimmen. Bei einer Weiterbildung des erfindungsgemäßen Verfahrens kann zusätzlich aus der Relativposition bezüglich eines bestimmten Markers und einer bekannten Absolutposition dieses Markers eine Absolutposition des Fahrzeugs, beispielsweise bezogen auf einen bestimmten Punkt in einer Fertigungshalle, bestimmt werden. Die Absolutposition kann direkt ausgegeben und beispielsweise von einer speicherprogrammierbaren Steuerung an andere Komponenten weitergegeben werden.

Die Rechen- und Auswerteschritte des erfindungsgemäßen Verfahrens werden bevorzugt auf der Recheneinrichtung als Computerprogramm ausgeführt.

In grundsätzlich bekannter Weise kann dieses Computerprogramm auf einem computerlesbaren Datenträger, insbesondere in einem ROM eines Mikrocontrollers oder eines programmierbaren Logikbausteins, gespeichert sein.

Weitere Vorteile und Merkmale der Erfindung werden nachstehend mit Bezug auf die beigefügten schematischen Figuren beschrieben. Hierin zeigt:

Fig. 1 eine schematische Ansicht eines Fahrzeugs mit einer daran angeordneten erfindungsgemäßen Vorrichtung an einer Bahn, welche eine Kurve aufweist;

Fig. 2 und Fig. 3 in schematischer Ansicht die geometrische Situation von Digitalkameras, welche gegenüber der Bahn verkippt sind; und

Fig. 4 und Fig. 5 in jeweils schematischer Ansicht die geometrischen Gegebenheiten für einzelne Berechungsschritte bei der Auswertung der Markerbilder.

Äquivalente Komponenten sind in allen Figuren mit denselben Bezugszeichen versehen.

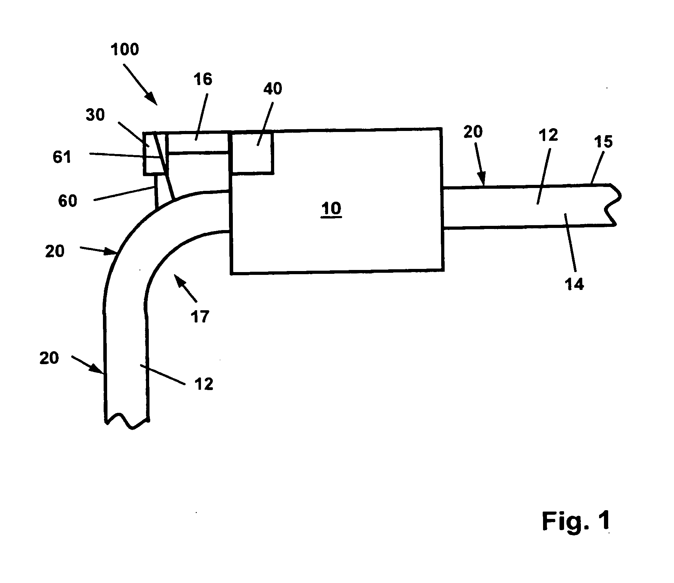

Ein Ausführungsbeispiel einer erfindungsgemäßen Vorrichtung 100 ist schematisch in Figur 1 dargestellt. Die dort gezeigte erfindungsgemäße Vorrichtung 100 weist als wesentliche Bestandteile eine über einen Arm 16 starr mit einem Fahrzeug 10 verbundene Digitalkamera 30 und eine Recheneinrichtung 40 auf. Bei besonderen Varianten kann die Recheneinrichtung 40 auch in die Digitalkamera 30 integriert sein.

Das Fahrzeug 10, wobei es sich beispielsweise um eine Einschienen-Hängebahn handeln kann, bewegt sich auf hier nicht gezeigten Rollen auf einem Träger 14, durch den eine Bahn 12 gegeben ist. Auf einer Außenseite 15 des Trägers 14 sind, in dieser Darstellung nicht sichtbar, eine Vielzahl von Markern 20, wobei es sich um zweidimensionale Barcodes handelt, jeweils in gleichen Abständen angeordnet.

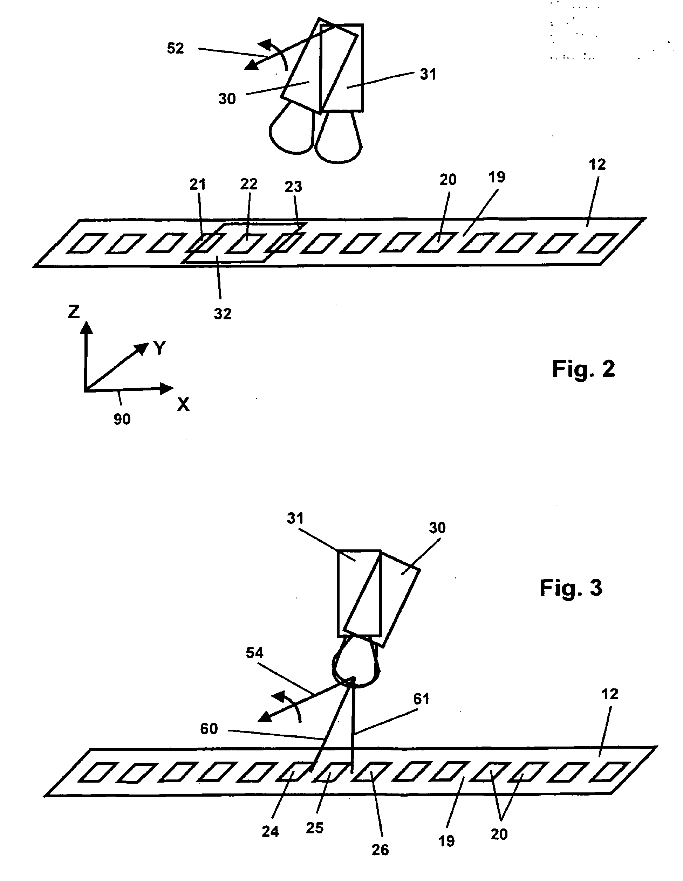

Die Digitalkamera 30 ist so positioniert, dass jeweils mindestens ein Marker 20 in den Erfassungsbereich 32 der Digitalkamera 30 fällt. Ein wesentlicher Grundgedanke der Erfindung ist, die von der Digitalkamera 30 in ihrem Erfassungsbereich 32, siehe Figur 2, aufgenommene optische Information im Rahmen einer Bildverarbeitung auszuwerten. Insbesondere werden dabei erfindungsgemäß die Positionen der Markerbilder im Erfassungsbereich 32 ausgewertet. Eine erfindungsgemäße Besonderheit, die bei der in Figur 1 gezeigten Situation, wo sich das Fahrzeug 10 durch einen Kurvenbereich 17 bewegt, besonders zum Tragen kommt, besteht darin, dass neben der Lage oder Position der Markerbilder im Erfassungsbereich 32 der Digitalkamera 30 auch die Form der Markerbilder berücksichtigt und ausgewertet wird.

Aus Lage und Form der Markerbilder kann dann zurückgerechnet werden auf die Relativposition und die Orientierung der Digitalkamera 30 relativ zu dem betreffenden Marker und es kann damit die präzise Positionierung des Fahrzeugs 10 bezüglich der Bahn 12 berechnet werden.

In der erfindungsgemäß vorhandenen Recheneinrichtung 40 wird das erfindungsgemäße Computerprogramm abgearbeitet. Ein Computerprogrammprodukt im Sinn der Erfindung kann insbesondere die Recheneinrichtung 40 selbst mit zugehörigem ROM-Speicher sein.

Schematische Teilansichten dieser Grundsituation finden sich außerdem in den Figuren 2 und 3, wo jeweils die Kamera in einer unverkippten Stellung, Bezugszeichen 31, und in einer verkippten Stellung, Bezugszeichen 30, dargestellt ist. Der Verkippungswinkel ist in Fig. 2 und 3 jeweils derselbe. Gezeigt sind dort außerdem die Marker 20 auf der Bahn 12. Typischerweise sind die Marker als Codeband 19 auf die Bahn 12 aufgeklebt. In den Figuren 2 und 3 ist darüber hinaus ein Erfassungsbereich 32 der verkippten Digitalkamera 30 schematisch gezeigt, wobei ein Marker 22 vollständig in diesen Erfassungsbereich 32 fällt und die benachbarten Marker 21, 23 jeweils zur Hälfte von dem Erfassungsbereich 32 erfasst werden.

Die Situation einer gegenüber der Bahn 12 verkippten Kamera kann auch dann eintreten, wenn die Kamera aus technischen Gründen nicht orthogonal zur Bahn eingebaut werden kann oder es aus anderen Gründen sinnvoll ist, eine verkippte Einbauweise zu wählen.

Bei der in Figur 2 dargestellten Situation befindet sich eine angenommene Drehachse 52 an einem hinteren Ende der Digitalkamera 30, wohingegen in Figur 3 um eine angenommene Drehachse 54 am vorderen Ende, also im Bereich der Linse der Digitalkamera 30, gedreht wird.

Die Lage der Raumachsen für die Figuren 2 und 3 ist in einem Koordinatensystem 90 angedeutet.

Eine wesentliche Idee der Erfindung besteht darin, dass bei bekanntem Abstand des Drehpunkts, der in den Figuren 2 und 3 als Drehachse 52 beziehungsweise Drehachse 54 dargestellt ist, von der Bahn 12, also von der Lesefläche, aus einem von der Digitalkamera 30 aufgenommenen Bild eine Position des Drehpunkts senkrecht auf die Bahn projiziert, berechnet wird.

In Figur 3 ist mit dem Bezugszeichen 60 eine optische Achse der Kamera 30 bezeichnet und der Auftreffpunkt dieser optischen Achse 60 auf der Bahn 12 zwischen den Markern 24 und 25 entspricht im Wesentlichen der Position, welche man erhalten würde, wenn man die Verkippung nicht bestimmen und auf dieser Grundlage auf die senkrechte Projektion auf die Bahn 12 zurückrechnen würde.

Durch Zurückrechnen gemäß dem erfindungsgemäßen Verfahren erhält man die Position des Drehpunkts orthogonal über der Bahn 12, welcher dem Durchstoßpunkt einer optischen Achse 61 der unverkippten Kamera 31 entspricht. Wie aus Figur 3 ersichtlich, liegt dieser Durchstoßpunkt zwischen den Markern 25 und 26.

Auf diese Weise kann eine Position des Fahrzeugs 10 praktisch unabhängig von der konkreten Anordnung der Digitalkamera 30 am Fahrzeug 10 bestimmt werden. Wichtig ist nur, dass man die konkrete Geometrie der Anordnung der Digitalkamera 30 am Fahrzeug 10 kennt und entsprechend als Parameter der Recheneinheit 40 zur Verfügung stellen kann. Hieraus ergibt sich für die Anwendung der bedeutende Vorteil einer erheblich vereinfachten Justage der Kamera. Darüber hinaus zieht eine während des Betriebs auftretende Verkippung der Kamera keine Positionsänderung nach sich. Beispielsweise sind Verfahrensvarianten möglich, bei denen der Abstand des Drehpunkts zur Bahn 12 oder zum Codeband 19 der einzige einzustellende Parameter ist.

Bei einer Variante des erfindungsgemäßen Verfahrens wird zunächst auf Basis des von der Digitalkamera 30 aufgenommenen Bildes ein Abstand des Bildmittelpunkts zum Codeband 19, also zur Ebene, in welcher die Marker 20 angeordnet sind, aufgenommen.

Aufgrund des Strahlensatzes ist dabei die Größe eines Markerbilds umgekehrt proportional zum Abstand von dem jeweiligen Marker.

Wesentliche Voraussetzung hierfür ist, dass die zweidimensionalen Barcodes an allen Stellen gleich groß und außerdem normiert sind.

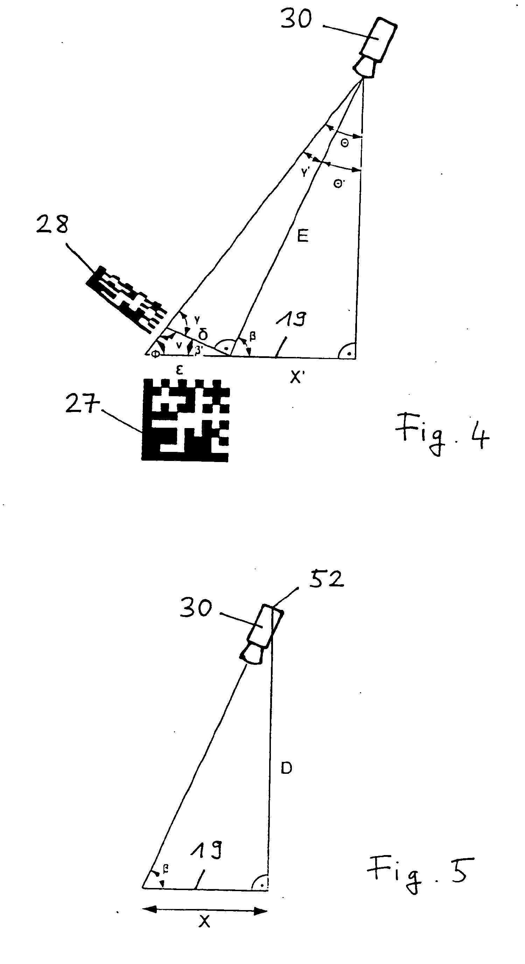

Mit Bezug auf die Figuren 4 und 5 werden im Folgenden einzelne mathematische Rechenschritte erläutert, um die Positionsabweichung zu berechnen. Die Schritte sind in den Figuren 4 und 5 für eine Verkippung der Digitalkamera 30 um die Y-Achse dargestellt. Dies kann grundsätzlich auf alle anderen Achsen verallgemeinert werden. Die Lage der Raumrichtungen ist für die Figuren 4 und 5 dieselbe wie in den Figuren 2 und 3.

Neben den geometrischen Gegebenheiten zeigt Figur 4 außerdem schematisch einen zweidimensionalen Barcode 27 sowie ein verzerrtes Bild 28 dieses Barcodes, so wie es in der in Figur 4 gezeigten Situation die Digitalkamera 30 aufgrund der Verkippung, welche in Figur 4 mit einem Winkel $\beta$ gekennzeichnet ist, nachgewiesen wird.

Bei der hier beschriebenen Verfahrensvariante wird zunächst aus der Größe des Markerbilds ein Abstand E der vorderen Kante von der Digitalkamera 30 berechnet. Weiterhin wird ebenfalls aus der Größe des Markerbilds eine Breite $\delta$ des abgebildeten Barcodes 28 bestimmt. Gegeben ist eine Originalbreite $\varepsilon$ des entsprechenden Barcodes 27. Diese entspricht im Wesentlichen einer Kantenlänge des Barcodes 27.

Unter Einsatz des aus der Abbildungsgröße gewonnenen Abstands E des Codebands 19 vom optische Strahlenschnittpunkt vor der Linse der Digitalkamera 30, der ebenfalls aus der Abbildungsgröße gewonnenen Breite $\delta$ des abgebildeten Barcodes und der Originalbreite $\varepsilon$ eines Barcodes werden sodann unter Verwendung elementarer geometrischer und trigonometrischer Funktionen folgende Größen berechnet:

| | |
|---|---|
| $\gamma = \arctan(E/\delta)$ | Siehe Figuren 4 und 5 |
| $\gamma' = 90° - \gamma$ | Siehe Figuren 4 und 5 |
| $v = 180° - \gamma$ | Siehe Figuren 4 und 5 |
| $\Phi = \arcsin(\delta/\varepsilon \cdot \sin(v))$ | Siehe Figuren 4 und 5 |
| $\theta = 90° - \phi$ | Siehe Figuren 4 und 5 |
| $\theta' = \theta - \gamma'$ | Siehe Figuren 4 und 5 |
| $\beta = 90° - \theta'$ | Siehe Figuren 4 und 5 |

Hieraus lässt sich anschließend die Größe X' bestimmen, welche dem Abstand von der Mitte des Blickfelds auf dem Codeband 19 bis zu dem in Figur 4 gezeigten optischen Strahlenschnittpunkt unmittelbar vor der Linse der Kamera 30 entspricht. Tatsächlich interessiert man sich jedoch für die in Figur 5 dargestellte Größe X, also den Positions-Offset zwischen dem vom Drehpunkt 52 der Digitalkamera 30 auf das Codeband 19 gefällte Lot und der vorderen Kante des Barcodes 27. Diesen Positions-Offset X erhält man unter Einsatz eines von einem Benutzer angegebenen Abstands D des Drehpunkts 52 vom Codeband 19 wie folgt:

$$X = D/\tan(\beta).$$

Die Erfindung beruht demgemäß darauf, dass auf Basis des Abstands E und eines Verkippungswinkels $\beta$ der Abstand X, wie oben dargestellt, berechnet werden kann. Im Fall der Abbildung 5 liegt der Drehpunkt 52 der Digitalkamera 30 am Ende des Kameragehäuses. Grundsätzlich kann der Drehpunkt aber auch an einer anderen Stelle der Digitalkamera 30 oder vollständig außerhalb des Kameragehäuses liegen. Die oben im Einzelnen dargestellte Berechnung für diese Verfahrensvariante erfordert im Wesentlichen elementare trigonometrische Berechnungen. Der Positions-Offset X wird nun zur gelesenen Position der Bildmitte addiert, woraus sich, wie gewünscht, eine reale Position des Drehpunkts 52 orthogonal über dem Codeband 19 ergibt.

Mit der vorliegenden Erfindung werden ein neues Verfahren und eine neue Vorrichtung zur Positionsbestimmung bei Fahrzeugen angegeben, mit welchen deutlich längere Fahrwege möglich sind und darüber hinaus auch die Position in Kurven präzise erfasst werden kann. Die Positioniergenauigkeit für Fahrzeuge wird demgemäß verbessert und die ausgegebene Positionsinformation kann linearisiert werden.

**Patentansprüche**

1. Verfahren zum Bestimmen der Position eines Fahrzeugs, welches entlang einer Bahn (12) bewegt wird, wobei entlang der Bahn (12) Marker (20), insbesondere Codeträger oder Barcodes, angeordnet sind, die mit einer an dem Fahrzeug (10) angeordneten Digitalkamera (30) erfasst werden,
   **dadurch gekennzeichnet,**
   **dass** mittels Bildverarbeitung aus einer Lage mindestens eines Markerbilds im Erfassungsbereich (32) der Digitalkamera (30) und einer Form des Markerbilds oder der Markerbilder eine Relativposition des Fahrzeugs (10) bezüglich des jeweiligen Markers (21, 22, 23) oder der jeweiligen Marker (21, 22, 23) bestimmt wird,
   **dass** mindestens ein Verkippungswinkel ($\beta$) einer optischen Achse (60, 61) der Digitalkamera (30) gegenüber der Bahn (12) bestimmt wird, und
   **dass** aus dem Abstand (E) der Digitalkamera (30) von einem Marker (21, 22, 23) und dem Verkippungswinkel ($\beta$) oder den Verkippungswinkeln eine tatsächliche Position der Digitalkamera (30) über der Bahn (12) bestimmt wird.

2. Verfahren nach Anspruch 1,
   **dadurch gekennzeichnet,**
   **dass** durch Auswerten der Form, insbesondere der Größe, eines Markerbilds ein Abstand (E) der Digitalkamera (30) von dem entsprechenden Marker (21, 22, 23) auf der Bahn (12) bestimmt wird.

3. Verfahren nach Anspruch 1 oder 2,
   **dadurch gekennzeichnet,**
   **dass** Verkippungen der Digitalkamera (30) in zwei voneinander unabhängigen Richtungen bestimmt werden.

4. Verfahren nach einem der Ansprüche 1 bis 3,
   **dadurch gekennzeichnet,**
   **dass** der Abstand (E) aus einer Länge einer Querseite eines Markerbilds bestimmt wird auf Grundlage einer bekannten realen Länge der Querseite des betreffenden Markers (21, 22, 23).

5. Verfahren nach einem der Ansprüche 1 bis 4,
   **dadurch gekennzeichnet,**
   **dass** ein Verkippungswinkel ($\beta$) bestimmt wird aus einer Länge ($\delta$) eines Markerbilds in Erstreckungsrichtung der Bahn (12) und dem Abstand (E) der Digitalkamera (30) von dem betreffenden Marker (21, 22, 23) auf Grundlage einer bekannten realen Länge ($\varepsilon$) des betreffenden Markers (21, 22, 23) in Erstreckungsrichtung der Bahn (12).

6. Verfahren nach einem der Ansprüche 1 bis 5,
   **dadurch gekennzeichnet,**
   **dass** als Marker (20) zweidimensionale Barcodes verwendet werden.

7. Verfahren nach einem der Ansprüche 1 bis 6,
   **dadurch gekennzeichnet,**
   **dass** die verwendeten Marker (20) mittels Bildverarbeitung eindeutig unterscheidbar sind.

8. Verfahren nach einem der Ansprüche 1 bis 7,
   **dadurch gekennzeichnet,**
   **dass** die Marker (20) in einer definierten Orientierung an der Bahn (12) angeordnet werden.

9. Verfahren nach einem der Ansprüche 1 bis 8,
   **dadurch gekennzeichnet,**
   **dass** die verwendeten Marker (20) eine rechteckige, insbesondere quadratische, Außenkontur aufweisen.

10. Verfahren nach einem der Ansprüche 1 bis 9,
    **dadurch gekennzeichnet,**
    **dass** aus den für das Fahrzeug (10) ermittelten Relativpositionen relativ zu einzelnen Markern (20) Absolutpositionen des Fahrzeugs (10) bezüglich der Umgebung bestimmt werden auf Grundlage von bekannten Positionen dieser Marker (21, 22, 23) bezüglich der Umgebung.

11. Vorrichtung zum Bestimmen der Position eines Fahrzeugs, welches entlang einer Bahn (12) beweglich ist, insbesondere zur Durchführung des Verfahrens nach einem der Ansprüche 1 bis 10,
mit einer an dem Fahrzeug (10) anzuordnenden Digitalkamera (30) zum Erfassen von entlang der Bahn (12) angeordneten Markern (20), insbesondere Codeträgern oder Barcodes,
**gekennzeichnet durch**
eine Recheneinrichtung (40), welche eingerichtet ist
zum Bestimmen einer Relativposition des Fahrzeugs (10) bezüglich eines Markers (21, 22, 23) mittels Bildverarbeitung aus einer Lage und einer Form eines Markerbilds des jeweiligen Markers (21, 22, 23) in einem Erfassungsbereich (32) der Digitalkamera (30),
zum Bestimmen mindestens eines Verkippungswinkels ($\beta$) einer optischen Achse (60, 61) der Digitalkamera (30) gegenüber der Bahn (12) und
zum Bestimmen einer tatsächlichen Position der Digitalkamera (30) über der Bahn (12) aus dem Abstand (E) der Digitalkamera (30) von einem Marker (21, 22, 23) und dem Verkippungswinkel ($\beta$) oder den Verkippungswinkeln.

12. Computerprogramm mit Programmcodemitteln, um die Rechen- und Auswerteschritte eines Verfahrens nach einem der Ansprüche 1 bis 10 durchzuführen, wenn das Computerprogramm auf einem mit der Digitalkamera (30) wirkungsmäßig verbundenen Computer, insbesondere der Recheneinrichtung (40) gemäß Anspruch 11, ausgeführt wird.

13. Computerprogrammprodukt mit Programmcodemitteln, die auf einem computerlesbaren Datenträger gespeichert sind, um die Rechen- und Auswerteschritte eines Verfahrens nach einem der Ansprüche 1 bis 10 durchzuführen, wenn das Computerprogramm auf einem mit der Digitalkamera (30) wirkungsmäßig verbundenen Computer, insbesondere der Recheneinrichtung (40) gemäß Anspruch 11, ausgeführt wird.

**Claims**

1. Method for determining the position of a vehicle which is moved along a lane (12), wherein markers (20), in particular code carriers or barcodes, are arranged along the lane (12) which are detected with a digital camera (30) arranged on the vehicle (10),
**characterised in that**
by means of image processing a relative position of the vehicle (10) in relation to the respective marker (21, 22, 23) or the respective markers (21, 22, 23) is determined from a position of at least one marker image in the detection range (32) of the digital camera (30) and a shape of the marker image or the marker images,
at least one tilt angle ($\beta$) of an optical axis (60, 61) of the digital camera (30) relative to the lane (12) is determined, and an actual position of the digital camera (30) over the lane (12) is determined from the distance (E) of the digital camera (30) from a marker (21, 22, 23) and the tilt angle ($\beta$) or the tilt angles.

2. Method according to claim 1,
**characterised in that**
a distance (E) of the digital camera (30) from the corresponding marker (21, 22, 23) on the lane (12) is determined by evaluating the shape, in particular the size, of a marker image.

3. Method according to claim 1 or 2,
**characterised in that**
tilts of the digital camera (30) are determined in two directions that are independent of each other.

4. Method according to one of claims 1 to 3,
**characterised in that**
the distance (E) is determined from a length of a transverse side of a marker image on the basis of a known real length of the transverse side of the marker (21, 22, 23) in question.

5. Method according to one of claims 1 to 4,
**characterised in that**
a tilt angle ($\beta$) is determined from a length ($\delta$) of a marker image in the extension direction of the lane (12) and the distance (E) of the digital camera (30) from the marker (21, 22, 23) in question on the basis of a known real length (ε) of the marker (21, 22, 23) in question in the extension direction of the lane (12).

6. Method according to one of claims 1 to 5,
   **characterised in that**
   two-dimensional barcodes are used as markers (20).

7. Method according to one of claims 1 to 6,
   **characterised in that**
   the markers (20) used can be clearly distinguished by means of image processing.

8. Method according to one of claims 1 to 7,
   **characterised in that**
   the markers (20) are arranged in a defined orientation on the lane (12).

9. Method according to one of claims 1 to 8,
   **characterised in that**
   the markers (20) used have a rectangular, in particular quadratic, outer contour.

10. Method according to one of claims 1 to 9,
    **characterised in that**
    absolute positions of the vehicle (10) in relation to the environment are determined from the relative positions, detected for the vehicle (10), relative to individual markers (20) on the basis of known positions of these markers (21, 22, 23) in relation to the environment.

11. Device for determining the position of a vehicle which can be moved along a lane (12), in particular to carry out the method according to one of claims 1 to 10,
    with a digital camera (30) to be arranged on the vehicle (10) to detect markers (20), in particular code carriers or barcodes, arranged along the lane (12), **characterised by**
    a computing means (40) which is adapted
    to determine a relative position of the vehicle (10) in relation to a marker (21, 22, 23) by means of image processing from a position and a shape of a marker image of the respective marker (21, 22, 23) in a detection range (32) of the digital camera (30),
    to determine at least one tilt angle (β) of an optical axis (60, 61) of the digital camera (30) relative to the lane (12) and
    to determine an actual position of the digital camera (30) over the lane (12) from the distance (E) of the digital camera (30) from a marker (21, 22, 23) and the tilt angle (β) or the tilt angles.

12. Computer program with program code means to carry out the computing and evaluation steps of a method according to one of claims 1 to 10 if the computer program is run on a computer, in particular the computing means (40) according to claim 11, effectively connected to the digital camera (30).

13. Computer program product with program code means which are stored on a computer-readable data carrier in order to carry out the computing and evaluation steps of a method according to one of claims 1 to 10 if the computer program is run on a computer, in particular the computing means (40) according to claim 11, effectively connected to the digital camera (30).

**Revendications**

1. Procédé de détermination de la position d'un véhicule qui est déplacé le long d'une voie (12),
   des marqueurs (20), en particulier des supports de code ou des codes barres, étant agencés le long de la voie (12), lesquels sont détectés avec une caméra numérique (30) agencée sur le véhicule (10),
   **caractérisé en ce**
   qu'à partir d'une position d'au moins une image de marqueur dans la zone de détection (32) de la caméra numérique (30) et d'une forme de l'image de marqueur ou des images de marqueurs, une position relative du véhicule (10) par rapport au marqueur (21, 22, 23) respectif ou aux marqueurs (21, 22, 23) respectifs est déterminée à l'aide d'un traitement d'image,
   qu'au moins un angle de basculement (β) d'un axe optique (60, 61) de la caméra numérique (30) par rapport à la voie (12) est déterminé, et

qu'une position réelle de la caméra numérique (30) sur la voie (12) est déterminée à partir de la distance (E) de la caméra numérique (30) par rapport à un marqueur (21, 22, 23) et de l'angle de basculement (β) ou des angles de basculement.

2. Procédé selon la revendication 1,
**caractérisé en ce**
qu'une distance (E) de la caméra numérique (30) par rapport à un marqueur (21, 22, 23) sur la voie (12) est déterminée par évaluation de la forme, en particulier de la grandeur, d'une image du marqueur correspondant.

3. Procédé selon la revendication 1 ou 2,
**caractérisé en ce**
que des basculements de la caméra numérique (30) sont déterminés dans deux directions indépendantes l'une de l'autre.

4. Procédé selon l'une des revendications 1 à 3,
**caractérisé en ce**
que la distance (E) est déterminée à partir d'une longueur d'un côté transversal d'une image de marqueur sur la base d'une longueur réelle connue du côté transversal du marqueur (21, 22, 23) concerné.

5. Procédé selon l'une des revendications 1 à 4,
**caractérisé en ce**
qu'un angle de basculement (β) est déterminé à partir d'une longueur (δ) d'une image de marqueur dans le sens d'étendue de la voie (12) et de la distance (E) de la caméra numérique (30) par rapport au marqueur (21, 22, 23) concerné sur la base d'une longueur réelle (ε) connue du marqueur (21, 22, 23) concerné dans le sens d'étendue de la voie (12).

6. Procédé selon l'une des revendications 1 à 5,
**caractérisé en ce**
que des codes barres en deux dimensions sont utilisés comme marqueurs (20).

7. Procédé selon l'une des revendications 1 à 6,
**caractérisé en ce**
que les marqueurs utilisés (20) se distinguent nettement à l'aide d'un traitement d'image.

8. Procédé selon l'une des revendications 1 à 7,
**caractérisé en ce**
que les marqueurs (20) sont agencés dans une orientation définie sur la voie (12).

9. Procédé selon l'une des revendications 1 à 8,
**caractérisé en ce**
que les marqueurs utilisés (20) présentent un contour extérieur rectangulaire, en particulier carré.

10. Procédé selon l'une des revendications 1 à 9,
**caractérisé en ce**
que des positions absolues du véhicule (10) par rapport à l'environnement sont déterminées à partir des positions relatives déterminées pour le véhicule (10) par rapport aux marqueurs (20) individuels sur la base de positions connues de ces marqueurs (21, 22, 23) par rapport à l'environnement.

11. Dispositif de détermination de la position d'un véhicule qui est mobile le long d'une voie (12), en particulier pour la mise en oeuvre du procédé selon l'une des revendications 1 à 10,
avec une caméra numérique (30) à agencer sur le véhicule (10) pour la détection de marqueurs (20) agencés le long de la voie (12), en particulier de supports de code ou de codes barres,
**caractérisé par**
un dispositif de calcul (40) qui est aménagé
pour la détermination d'une position relative du véhicule (10) par rapport à un marqueur (21, 22, 23) à l'aide d'un traitement d'image à partir d'une position et d'une forme d'une image du marqueur (21, 22, 23) respectif dans une zone de détection (32) de la caméra numérique (30),

pour la détermination d'au moins un angle de basculement (β) d'un axe optique (60, 61) de la caméra numérique (30) par rapport à la voie (12) et

pour la détermination d'une position réelle de la caméra numérique (30) sur la voie (12) à partir de la distance (E) de la caméra numérique (30) par rapport à un marqueur (21, 22, 23) et de l'angle de basculement (β) ou des angles de basculement.

12. Programme informatique avec des moyens de code de programme, afin de mettre en oeuvre les étapes de calcul et d'évaluation d'un procédé selon l'une des revendications 1 à 10, lorsque le programme informatique est exécuté sur un ordinateur relié de manière fonctionnelle à la caméra numérique (30), en particulier le dispositif de calcul (40) selon la revendication 11.

13. Produit de programme informatique avec des moyens de code de programme qui sont enregistrés sur un support de données lisible sur ordinateur, afin de mettre en oeuvre les étapes de calcul et d'évaluation d'un procédé selon l'une des revendications 1 à 10, lorsque le programme informatique est exécuté sur un ordinateur relié de manière fonctionnelle à la caméra numérique (30), en particulier le dispositif de calcul (40) selon la revendication 11.

**Fig. 1**

**Fig. 2**

**Fig. 3**

EP 2 037 227 B1

Fig. 4

Fig. 5

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19910933 A1
- EP 0039921 A2
- DE 3825097 A1
- EP 0116636 A1
- DE 3910873 A1
- DE 4209629 A1
- DE 4309863 C1
- DE 102004018404 A1
- EP 1582846 A2
- DE 4104602 C1
- EP 0722903 A1